# EUROPEAN PATENT SPECIFICATION

(11) **EP 0 972 466 B1**
(45) Date of publication and mention of the grant of the patent: **17.09.2003**
(21) Application number: 99202270.7
(22) Date of filing: 10.07.1999
(51) Int. Cl.: A47B 13/02, F16B 12/44

(54) **Improved device for connecting a leg to a table top**
Verbindungselement zwischen Tischplatte und Tischbein
Raccord entre dessus et pied de table

(30) Priority: 17.07.1998 IT MI980496 U
(43) Date of publication of application: 19.01.2000
(73) Proprietor: LEONARDO S.r.l., 22060 Figino Serenza (Como) (IT)
(72) Inventor: Cattaneo, Carlo, I-22060 Figino Serenza(Como) (IT)
(74) Representative: Martegani, Franco

(56) References cited:
- DE-A- 19 745 073

## Description

The present invention refers to an improved device commonly referred to as "plate", which enables tubular metal legs, for example cylindrical legs, to be fixed to the top of a table.

More precisely, the invention refers to a device of the type described and illustrated in the Italian Patent No. 1.028.018 to which the reader is referred should he require further clarifications.

To the experts of the sector it is well known how, in order to fix a tubular metal leg in a stable way to a table top, it is necessary to provide, first of all, an intermediate means of connection between the leg and the table top, which is able to carry out fixing, between the two parts, that may be solid and stable over time.

In addition, considering the current requirements of the market, such a means of connection should also present a structure which, in addition to being relatively simple and economic to manufacture, does not require any complex additional machining or processing either to the top of the leg or to the table top and which, at the same time, makes possible a fast assembly of the table even by non-specialized staff, thus enabling the shipment of the detached parts in packages of overall dimensions reduced to the minimum, with consequent big savings.

The device that is the subject of the Patent IT 1.028.018 solves the problems referred to above and consists of a single metal piece which incorporates a cup with expandable septa (onto which a tubular metal leg may be conveniently slid); to the above cup is associated a circumferential flange with radial arms for fixing the device itself to the table top by means of screws.

After being slid on the expandable cup, the tubular leg is stably fixed in position by means of the expansion of the above-mentioned septa, the said expansion being performed by the screwing of a radial headless screw built into the device and accessible through a hole made in the leg.

In fact, the tip of the headless screw, when screwed, acts on the septa set opposite to one another in the cup, thus causing their radial expansion outwards, and hence their engagement by friction on the inner surface of the metal leg.

By unscrewing the headless screw, it is obviously possible to separate the device from the leg again on account of the elasticity of the septa that make up the cup.

In this way, a joining system (joint) is made between the tubular metal legs and a table top which does not require any additional machining on the various pieces during the assembly phase and which may be carried out, without problems, even by non-specialized staff.

The device described above, built according to the teachings of the Patent No. IT-1.028.018, has given fully satisfactory results.

However, in a joining device such as the one described and illustrated in IT-1.028.018 the threaded seat that receives the headless screw for expanding the septa is made with a separate operation of drilling and threading of the body of the cup, which is, instead, produced in a single piece together with the circumferential flange and the radial arms, by means of a pressure die-casting operation.

Obviously, the operation of drilling and threading of the cup of the device after the casting of the same by means of pressure die-casting involves further manipulation and machining of the piece, which have a far from negligible effect on the final cost of the article.

With the purpose of eliminating the aforementioned operation of drilling and threading of the seat of the headless screw for expanding the septa of the cup, it has already been proposed to make a device for the stable connection of a leg to a table top of the type comprising an expandable body that may be inserted at the complementary hollow top of the said leg, a headless expansion screw which may be screwed within a threaded seat of said body and which is adjustable from outside the leg, and means of attachment at the top of the expandable body for fixing the table top to it, where the seat of the headless screw is made up of a number of arched sections internally threaded, which are set opposite to one another and staggered so as to define, in said tubular seat, openings adjacent to each of said arched sections.

Such a device is, for example, described and illustrated in EP-467460.

The general purpose of the present invention is to propose yet another advantageous embodiment of the device in question, where it is not necessary to drill and thread the seat of the headless screw for expanding the septa of the cup.

This purpose is achieved by a device having the characteristics set forth in the attached main claim and subsequent claims.

The structural and functional characteristics of the invention and its advantages with respect to the known art will be more evident from an examination of the following description thereof, made with reference to the attached drawings, which show a number of devices all incorporating the innovative principles of the invention itself. In the drawings:
- Figure 1 is a partially cutaway and sectioned exploded perspective view illustrating a device according to the invention, complete with nut and headless expansion screw;
- Figure 2 is a plan view from above of the device of Fig. 1;
- Figure 3 is a sectional view taken according to the plane of the trace III-III of Fig. 2, with the nut exploded but without the headless expansion screw;
- Figure 4 is a sectional view taken according to the plane of trace IV-IV of Fig. 2, with the nut exploded;
- Figure 5 is a plan view from below of the device of Fig. 2, without the nut and headless expansion screw;
- Figure 6 is a view like that of Fig. 5 illustrating the device complete with nut and headless expansion screw;
- Figure 7 is a front view of the device of Figs. 1 to 6;
- Figure 8 is a plan view from above of the device of Figs. 1 to 7, complete with nut and headless expansion screw;
- Figure 9 is a plan view from above illustrating another possible embodiment of a device according to the innovative principles of the present invention, without nut and headless expansion screw;
- Figure 10 is a sectional view taken according to the plane of trace X-X of Figure 9, with the nut exploded but without headless expansion screw;
- Figure 11 is a sectional view taken according to the plane of trace XI-XI of Fig. 9, with the nut exploded;
- Figure 12 is a plan view from below illustrating a further possible embodiment of the invention;
- Figure 13 is a plan view from above of the device of Fig. 12, complete with nut and headless expansion screw;
- Figure 14 is a plan view from below illustrating yet another possible embodiment of the invention;
- Figure 15 is a plan view from above of the device of Fig. 14, complete with nut and headless expansion screw; and
- Figures 16 and 17 are two sectional views illustrating the device of the invention used for fixing a leg to a table top, respectively in the non-operative condition and in the operative condition.

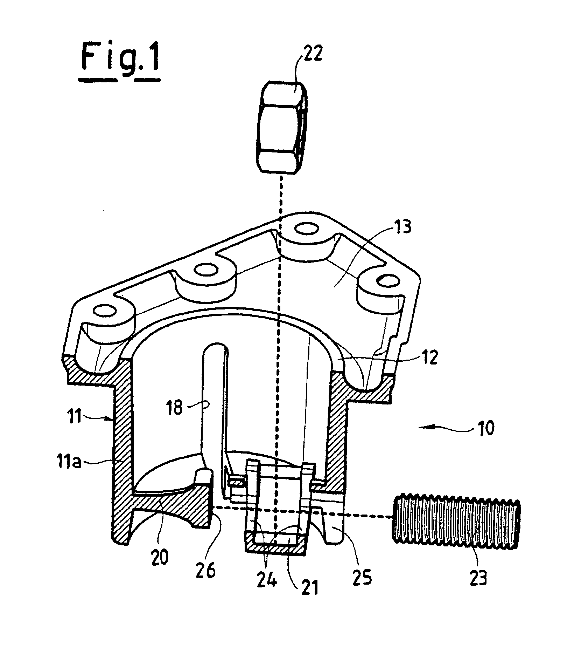

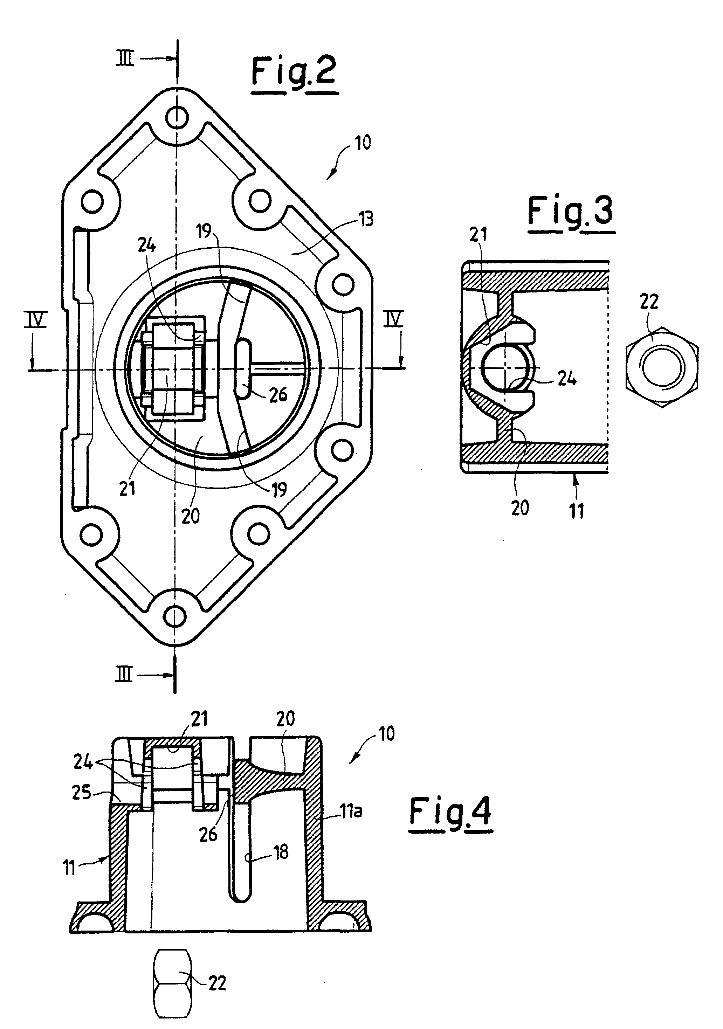

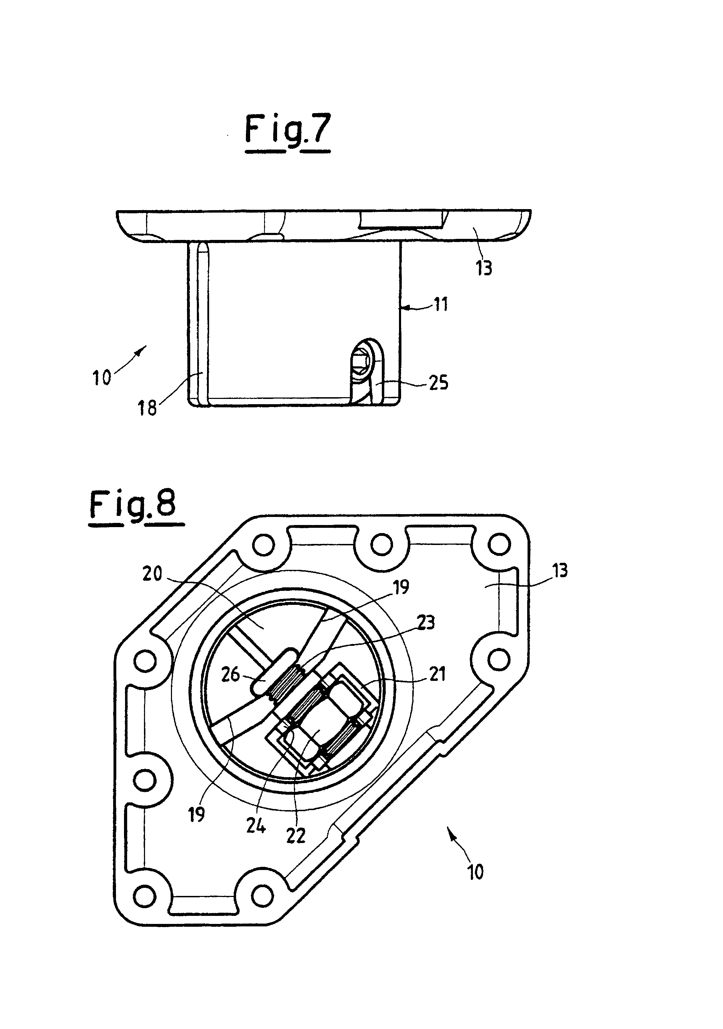

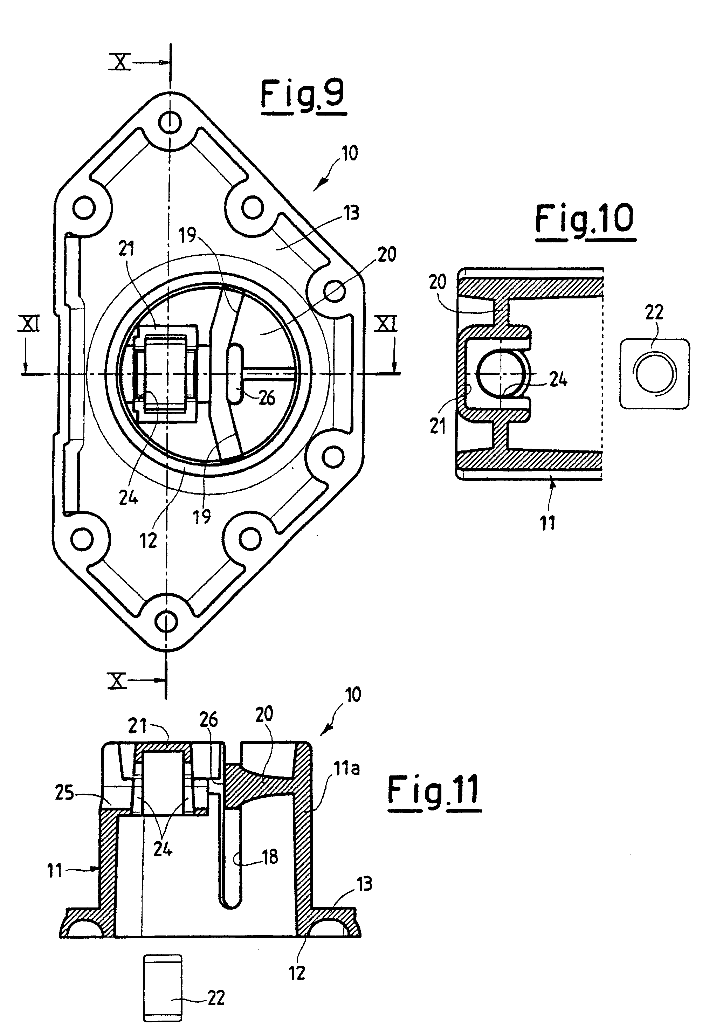

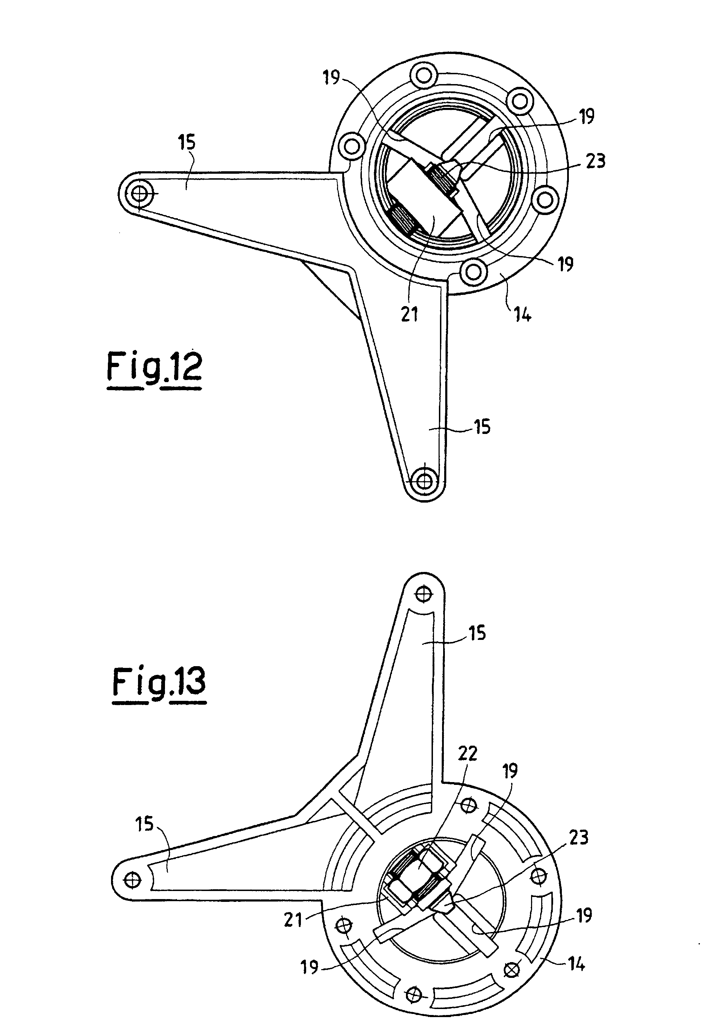

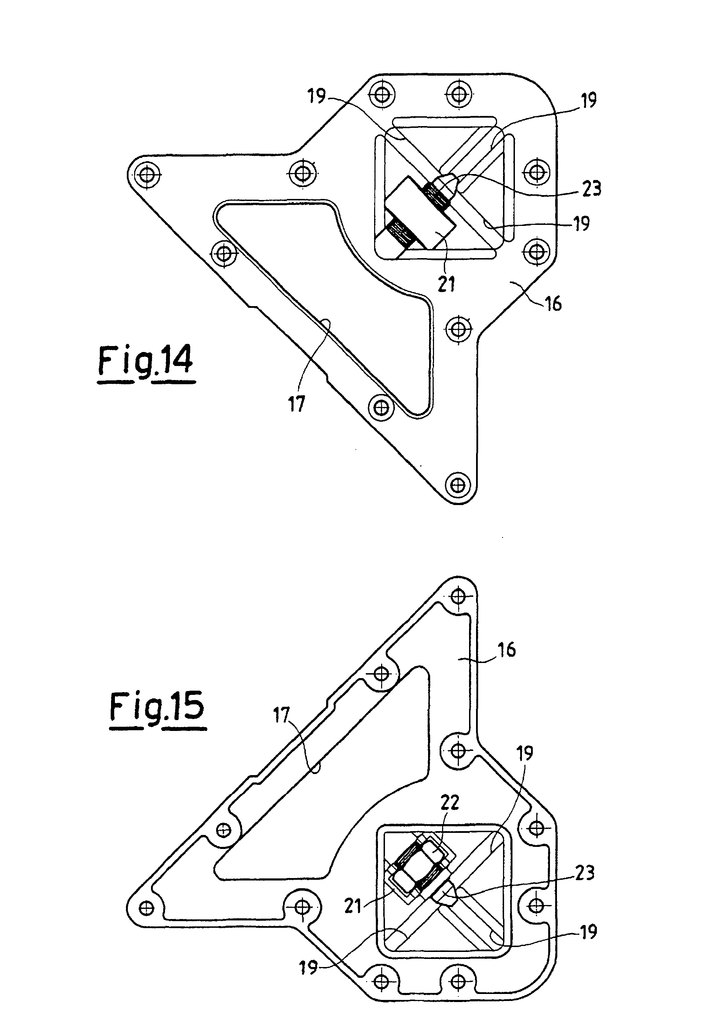

With reference to the drawings, by 10 is indicated as a whole the device in question, commonly called "joint", consisting preferably of a metal casting made of aluminium, which is structurally made up of an expandable body having the shape of a cylindrical cup 11, from the base of which 12 there extend means for fixing the device to a table top or the like, represented schematically by 29. The said fixing means may, for instance, be made up of a polygonal flange 13 (Figs. 1-10), or else of a circumferential flange 14 provided with arms 15 (Figs. 12 and 13), or again by a polygonal flange 16 (Figs. 14 and 15), possibly lightened by an opening 17 (Fig. 14) having a more complex configuration than the one shown in Figures 1 to 11.

As is evident, the means for fixing the device to the table top may be of the most varied configurations according to the actual requirements.

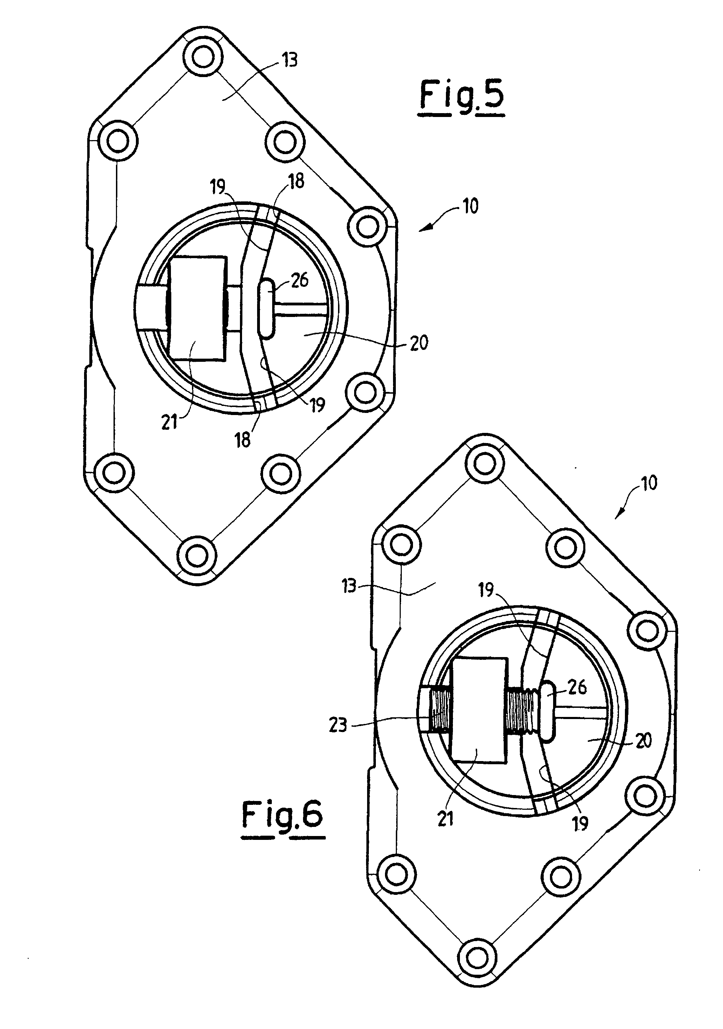

The cylindrical side wall of the said cup 11 presents, along its generatrices, a number of slits 18 (for example two or three) which proceed in respective radial slits 19 made through the base 20 of the cup itself opposite to the one from which the above-mentioned fixing means extend (Figs. 5 and 6).

The aforesaid slits 18, 19 are appropriately interspaced and have the purpose of rendering a section 11a tapered as in 27 of said cup 11 relatively yielding.

According to the present invention, in the base 20 of the cup, opposite to the fixing means (flanges 13, 16 or arms 15) is made a housing 21 for a nut 22 through which a headless expansion screw 23 can be screwed, which is set opposite to the aforesaid tapered section 11a. The nut 22 is shaped so as to be complementary to the housing 21 in order to prevent its free rotation.

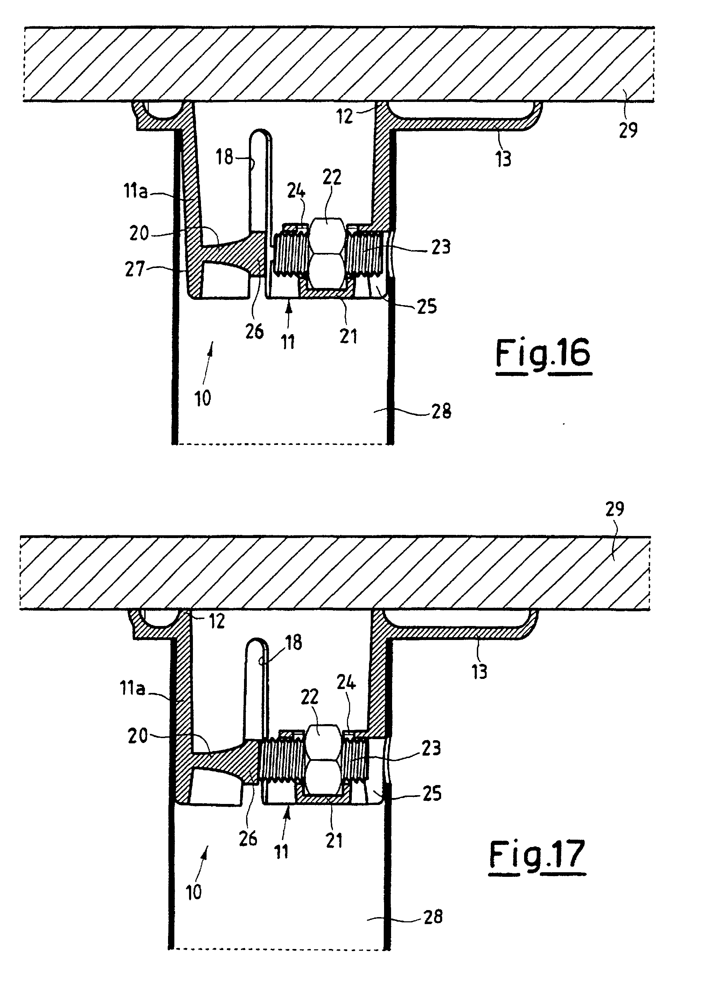

For insertion of the headless expansion screw 23, the said housing 21 is provided with a hole as in 24, and likewise in the shell 11 of the device there is provided an opening 25 through which the headless screw 23 can be made to pass so as to be screwed through the aforesaid nut 22. The nut 22 may have various configurations, as shown in Figures 1-4 and 9-11. In addition, aligned with the said holes 24 of the housing 21, in the base 20, there is provided a contrast surface 26, against which the headless screw 23, screwed into the nut 22, acts for expansion of the elastically yielding section 11a of the body 11 from the non-operative position of Figure 16 of sliding of the leg 28 onto the body 11 to the operative position of Figure 17 of stable blocking of the body 11 itself against the inner surface of the leg 28. Instead of against the contrast surface 26 (Figs. 1-11), the headless screw 23 can act, with its wedge-shaped end, directly in the slit 19 of the base 20.

For the mode of use of the joint, the reader is referred to the text and drawings of IT-1.028.018.

## Claims

1. Device (10) for providing stable connection of a leg (28) to a table top (29) of the type comprising: an expandable body (11) that may be inserted at the complementary hollow top of said leg (28), a headless expansion screw (23), which screws within a threaded seat of said body (11) and may be adjusted from outside the leg (28), and means of attachment (13, 15, 16) at the top of the expandable body (11) for fixing the table top (29) to it, **characterized in that** the seat of the headless screw (23) consists of a nut (22) set so that it is freely movable within a complementary housing (21) made in said expandable body (11), which has a hole (24) made in it.

2. Device according to Claim 1, **characterized in that** said housing (21) is made in a base (20) of said expandable body 11.

3. Device according to Claim 2, **characterized in that** the holes (24) of said housing (21) are aligned with a contrasting surface (26), against which the said headless screw (23) screwed into the nut (22) for expansion of the body (11) acts.

4. Device according to Claim 1, **characterized in that** said headless expansion screw (23) acts against a tapered section (11a), set opposite to the screw, of said expandable body (11), the said tapered section (11a) being separate from the body 11 by means of slits (18, 19).

## Patentansprüche

1. Vorrichtung (10) zum Bereitstellen einer stabilen Verbindung eines Beines (28) mit einem oberen Ende eines Tisches (29) umfassend: einen dehnbaren Körper (11), welcher an der komplementären hohlen oberen Seite des Beines (28) eingefügt werden kann, eine kopflose Expansionsschraube (23), welche in eine Auflage des Körpers (11) mit Gewinde geschraubt ist und von außerhalb des Beines (28) eingestellt werden kann, und Befestigungsmittel (13, 15, 16) an der oberen Seite des dehnbaren Körpers (11), um die obere Seite des Tisches (29) damit zu befestigen,
**dadurch gekennzeichnet,**
**dass** die Auflage der kopflosen Schraube (23) aus einer Mutter (22) besteht, welche derart sitzt, dass sie frei in einem in dem dehnbaren Körper (11) bereitgestellten komplementären Gehause (21), welches ein darin hergestelltes Loch (24) besitzt, bewegbar ist.

2. Vorrichtung nach Anspruch 1, **dadurch gekennzeichnet, dass** das Gehäuse (21) in einer Basis (20) des dehnbaren Körpers (11) bereitgestellt ist.

3. Vorrichtung nach Anspruch 2, **dadurch gekennzeichnet, dass** die Löcher (24) des Gehäuses (21) an einer entgegengesetzten Oberfläche (26) ausgerichtet sind, gegen welche die kopflose Schraube (23), welche zur Ausdehnung des Körpers (11) in die Mutter (22) gedreht ist, arbeitet.

4. Vorrichtung nach Anspruch 1, **dadurch gekennzeichnet, dass** die kopflose Expansionsschraube (23) gegen einen sich verjüngenden Abschnitt (11a) des dehnbaren Körpers (11), welcher gegenüber der Schraube sitzt, arbeitet, wobei der sich verjüngende Abschnitt (11a) von dem Körper (11) durch Schlitze (18, 19) getrennt ist.

## Revendications

1. Dispositif (10) destiné à fournir une liaison stable d'un pied (28) à une partie supérieure d'une table (29) du type comprenant : un corps expansible (11) qui peut être introduit au niveau de la partie supérieure creuse dudit pied (28), une vis d'expansion sans tête (23), qui peut être vissée à l'intérieur d'un support fileté dudit corps (11) et peut être ajustée de l'extérieur du pied (28), et des moyens de fixation (13, 15, 16) à la partie supérieure du corps expansible (11) en vue d'y fixer la partie supérieure de la table (29), **caractérisé en ce que** le support de la vis sans tête (23) se compose d'un écrou (22) adapté pour être déplaçable librement à l'intérieur d'un logement complémentaire (21) réalisé dans ledit corps expansible (11), dans lequel un trou (24) est pratiqué.

2. Dispositif selon la revendication 1, **caractérisé en ce que** ledit logement (21) est réalisé dans une base (20) dudit corps expansible (11).

3. Dispositif selon la revendication 2, **caractérisé en ce que** les trous (24) dudit logement (21) sont alignés sur une surface de contraste (26), contra laquelle ladite vis sans tête (23) vissée dans l'écrou (22) pour provoquer l'expansion du corps (11), agit.

4. Dispositif selon la revendication 1, **caractérisé en ce que** ladite vis d'expansion sans tête (23) agit contre une section conique (11a), placés en face de la vis, dudit corps expansible (11), ladite section conique (11a) étant séparée du corps (11) au moyen de fentes (18, 19).
